# EUROPEAN PATENT APPLICATION

(11) **EP 3 480 503 A1**
(43) Date of publication of application: **08.05.2019**
(21) Application number: 17200463.2
(22) Date of filing: 07.11.2017
(51) Int. Cl.: F16L 11/118, A47L 9/24, F16L 11/127

(54) **ELECTRICAL STRETCH HOSE**

(71) Applicant: Plastiflex Group, 3583 Paal-Beringen (BE)
(72) Inventor: Gibson, Diane, Clydebank G81 2UG (GB); Bao, Shuguang, Suzhou, Jiangsu 234000 (CN); Hu, Siyu, Suzhou, Jiangsu 234000 (CN)
(74) Representative: Nederlandsch Octrooibureau

(57) **Abstract**

An electrical stretch hose comprising at least two alternating helical support wires (111,121) and a cover (130) of flexible plastic material provided on the outside of the helical support wires (111, 121), wherein said helical support wires (111,121) have a natural axially-retracted state wherein the cover (130) of flexible plastic material is folded between adjacent windings of said helical support wires and an axially-extended state when the hose is pulled wherein the adjacent windings of said helical support wires (111, 121) are spaced apart and said flexible material is unfolded, wherein at least two of said helical support wires each comprise a steel wire (115,125), a conductive coating (116, 126) provided on said steel wire and provided to improve conductivity of said steel wire, and an insulation layer (117, 127) surrounding said conductive layer (116, 126).

## Description

### Field of the invention

The present invention relates to electrical stretch hoses of the type comprising a helical support wire and a cover of flexible plastic material.

### Background art

Known electrical stretch hoses, commonly used for vacuum cleaners, comprise a helical support wire with a cover of flexible plastic material provided on the outside of the helical support wire. The support wire is a steel wire which has a natural axially-retracted state wherein the cover of flexible plastic material is folded between adjacent windings of the wire and an axially-extended state when the hose is pulled wherein the adjacent windings of said helical support wires are spaced apart and said flexible material is unfolded. The known hoses further comprise one or more conductors for conducting electrical current, which may be arranged adjacent to the steel wire as in US 5,555,915 or on the folded portions of the cover as in US 7,520,302.

Due to the presence of the steel wire, which needs sufficient strength to avoid that the hose collapses during vacuum cleaning, the weight of these hoses may be considerable.

### Summary of the invention

It is an aim of the present invention to provide an electrical stretch hose of reduced weight.

This aim is achieved according to the invention as defined in the first claim.

The invention provides, according to a first aspect, an electrical stretch hose comprising at least two alternating helical support wires and a cover of flexible plastic material provided on the outside of the helical support wires, wherein said helical support wires have a natural axially-retracted state wherein the cover of flexible plastic material is folded between adjacent windings of said helical support wires and an axially-extended state when the hose is pulled wherein the adjacent windings of said helical support wires are spaced apart and said flexible material is unfolded, wherein at least two of said helical support wires each comprise a steel wire, a conductive coating provided on said steel wire and provided to improve conductivity of said steel wire, and an insulation layer surrounding said conductive layer.

The inventors have found that by providing two or more helical support wires, which are wound in parallel, the weight of the hose can be reduced. This is because the strength needed to avoid collapse is now provided by two or more helical support wires, which can thus each have a reduced strength vs. a single helical support wire. Furthermore, the multiple helical support wires have a larger pitch (at least twice) than a single helical support wire, so that their length is at most half of that of the single helical support wire. Still further, by providing the electrical conductors in the form of a conductive coating on the steel wires, the added weight to provide the conductors on the hose can also be reduced. The inventors have found that, in combination, these features may lead to a considerable reduction in weight of the hose while keeping other properties, like stretchability, crush resistance, voltage and power losses over the full length of the hose and others, within acceptable ranges.

In embodiments according to the invention, the steel wires may have a cross-section with a diameter in the range of 0.7 mm to 1.4 mm, preferably 0.9 mm to 1.1 mm.

In embodiments according to the invention, the steel wires may be made of steel with an ultimate tensile strength of in the range of 600 to 2500 MPa, preferably 600 to 1200 MPa.

In embodiments according to the invention, the conductive coating may be made of a material with an electrical resistivity p below 3.0 x 10-8 Ωm. The conductive coating is preferably made of aluminium or copper. More preferably, the conductive coating is a copper cladding with a thickness in the range of 0.1 to 0.6 mm.

In preferred embodiments, e.g. for carrying higher voltages (e.g. 110 V), the copper clad steel wire has a copper content of at least 10% by volume.

In preferred embodiments, e.g. for carrying lower voltages (e.g. 24 V), the copper clad steel wire has a copper content of at least 35% by volume.

In embodiments according to the invention, the hose further comprises at least one conductive signal wire. Such a signal wire may be embedded in the insulation layer of one of the helical support members and/or in (folded) portions of the cover in between the adjacent windings of the helical support members. Such signal wires may be used to transmit for example control signals, sensor signals or other. The one or more signal wires may have a cross-section with a diameter in the range of 0.1 to 0.6 mm.

In embodiments according to the invention, the cover may be a convoluted web. The convoluted web preferably has a span of at least five consecutive windings of the helical support members. The convolutes preferably have an overlap corresponding to at least three consecutive windings of the helical support members.

In embodiments according to the invention, the cover and the insulation layers of the helical support members are preferably made of compatible thermoplastic materials to ensure a bond between the cover and the insulation layers. The insulation layers may have a thickness in the range of 0.2 to 0.8 mm. The convoluted web may have a thickness in the range of 0.3 to 0.6 mm.

In embodiments according to the invention, the hose may be stretchable up to at least twice its length in retracted state.

In embodiments according to the invention, the helical support wires have the same dimensions.

In embodiments according to the invention, the hose in retracted state has an interior diameter in the range of 25 to 40 mm.

### Brief description of the drawings

The present invention will be discussed in more detail below, with reference to the attached drawings.
Fig. 1 shows a side view of a first embodiment of a hose according to the invention, in retracted state, with part of the wall of the hose broken away to expose the cross-section of the hose wall.
Fig. 2 shows a detail of the cross-section of the wall of the hose of Fig. 1.
Fig. 3 shows the cross-section of Fig. 2 in extended state.
Fig. 4 shows a side view of a second embodiment of a hose according to the invention, in retracted state, with part of the wall of the hose broken away to expose the cross-section of the hose wall.
Fig. 5 shows a detail of the cross-section of the wall of the hose of Fig. 4.
Fig. 6 shows the cross-section of Fig. 5 in extended state.
Figs. 7-9 show cross-sections of the hose wall of further embodiments according to the invention.

### Description of embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

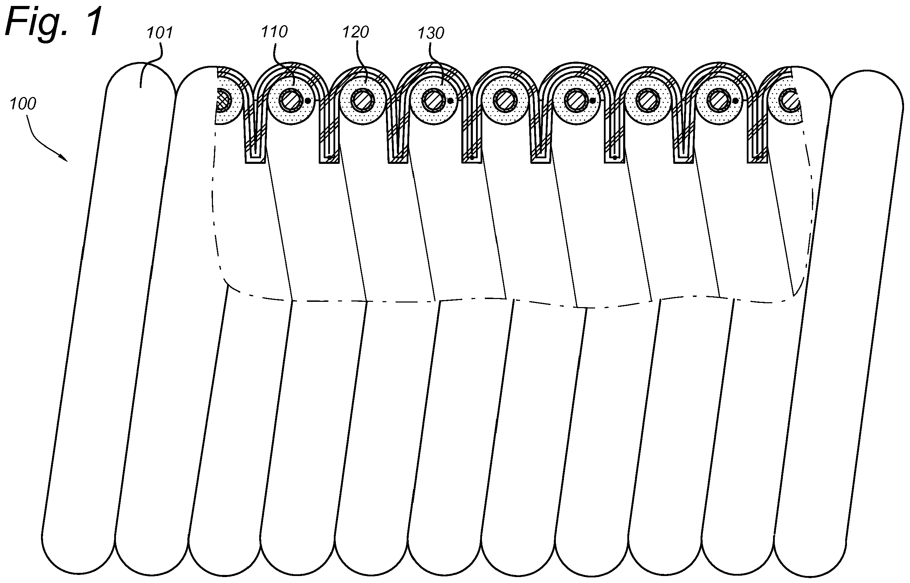

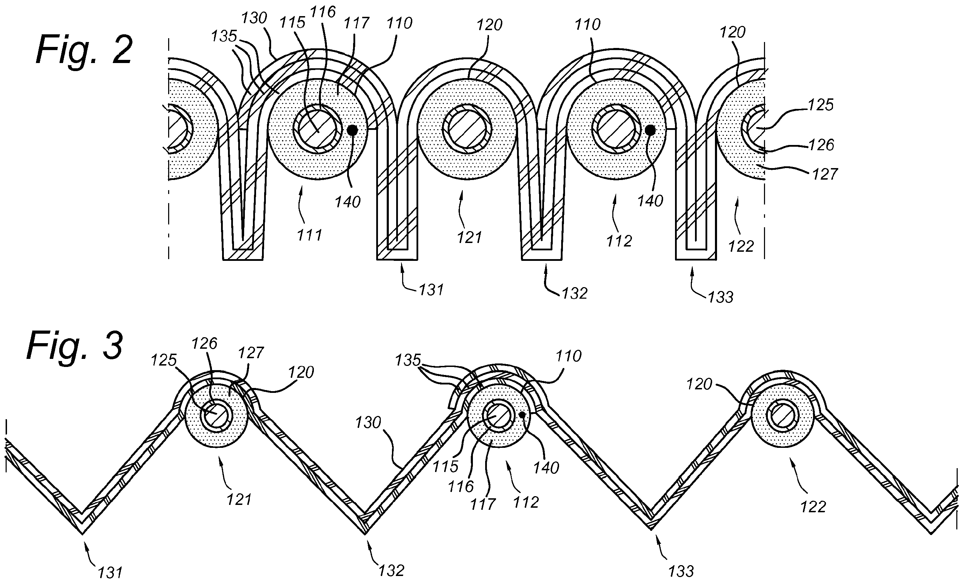

Fig. 1 shows a side view of a first embodiment of an electrical stretch hose 100 according to the invention, in retracted state, with part of the wall 101 of the hose broken away to expose the cross-section of the hose wall. Fig. 2 shows a detail of the cross-section of the wall of this hose 100. Fig. 3 shows the cross-section of Fig. 2 in axially-extended state.

The electrical stretch hose 100 comprises two alternating helical support wires 110, 120 and a cover 130 of flexible material provided on the outside of the helical support wires and attached thereto. The helical support wires have a natural axially-retracted state (Fig. 2) and an axially-extended state (Fig. 3) when the hose is pulled. In retracted state, the cover 130 is folded between adjacent windings 111, 121, 112, 122 of the helical support wires 110, 120, i.e. the support wires 110, 120 retract the cover and thereby folded portions 131, 132, 133 are formed between the adjacent windings. When the hose is pulled to the extended state, the windings 111, 121, 112, 122 are spaced apart and the cover portions 131, 132, 133 are unfolded.

The two helical support wires 110, 120 have the same dimensions and comprise each a core wire 115, 125 made of steel, a conductive coating 116, 126 provided on the steel core wire and an insulation layer 117, 127 surrounding the conductive layer. As a result of this construction with two helical support wires 110, 120 which are wound in parallel, the overall weight of the hose 100 can be reduced compared to prior art. This is because the strength or crush resistance needed to avoid collapse during use, e.g. vacuuming, is provided by two helical support wires instead of only one and the two helical support wires can consequently each have a reduced strength compared to the single helical support wire. Furthermore, the two helical support wires have a larger pitch (at least twice) than the single helical support wire, so that their length is at most half of that of the single helical support wire, which can also contribute to the reduced weight. Still further, by providing the electrical conductors in the form of conductive coatings on the steel wires, the added weight to provide the conductors on the hose can also be reduced.

The properties of the components of the hose 100 may vary according to the intended application. In the following, the application in cleaners, such as for example central vacuum cleaner systems, is discussed. For such applications, the internal diameter of the hose in retracted condition is preferably in the range of 25 to 40 mm.

In order to achieve sufficient stretchability (preferably at least twice the retracted length), memory (capacity to retract to the naturally-retracted state) and sufficient crush resistance, the steel wires 115, 125 preferably have the following properties: core diameter (diameter of cross-section of the steel wire) in the range of 0.7 mm to 1.4 mm and made of steel with an ultimate tensile strength in the range of 600 to 2500 MPa, preferably 600 to 1200 MPa.

In case the electrical stretch hose 100 is intended to carry a high voltage (e.g. 110 V), the conductive coating may be a relatively thin aluminium coating or a copper coating (e.g. copper wash) with a thickness in the range of 0.1 to 0.4 mm.

In case the electrical stretch hose 100 is intended to carry a low voltage (e.g. 24 V), which implies higher currents for the same power, the conductive coating may be a copper cladding with a thickness in the range of 0.1 to 0.6 mm. It has been found that with such a copper cladding, the voltage drop and the power loss over the entire length of the hose (1.4 m extended) can be kept below 10%. Such a coating is also suitable for higher voltages.

In general, it is preferred that the conductive coating 117, 127 is made of a material with an electrical resistivity p below 3.0 x 10⁻⁸ Ωm.

The hose 100 further comprises a conductive signal wire 140, which is embedded in the insulating layer 117 of one of the helical support wires 110. This signal wire 140 may be a copper or aluminium wire with a diameter of 0.1 to 0.6 mm.

The insulation layers 117, 127 may be made of any electrical insulation material and with any thickness deemed suitable by the person skilled in the art. Preferably the layers 117, 127 are made of a thermoplastic material which bonds well with the material of the cover 130, which is preferably also a thermoplastic material.

The cover 130 may be a convoluted web 135 with a thickness in the range of 0.3 to 0.6 mm. As shown, the convoluted web has a span of five consecutive windings of the helical support members and the convolutes have an overlap over three consecutive windings of the helical support members.

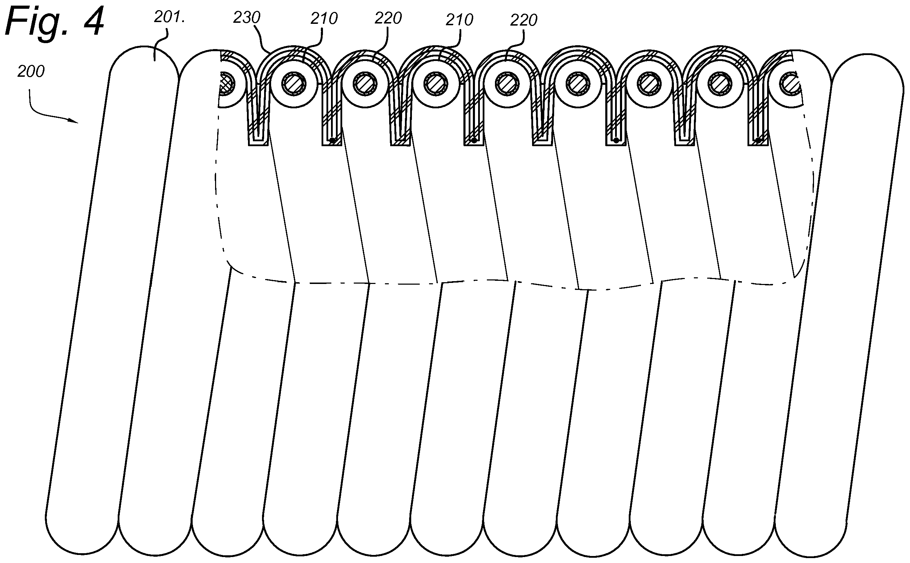

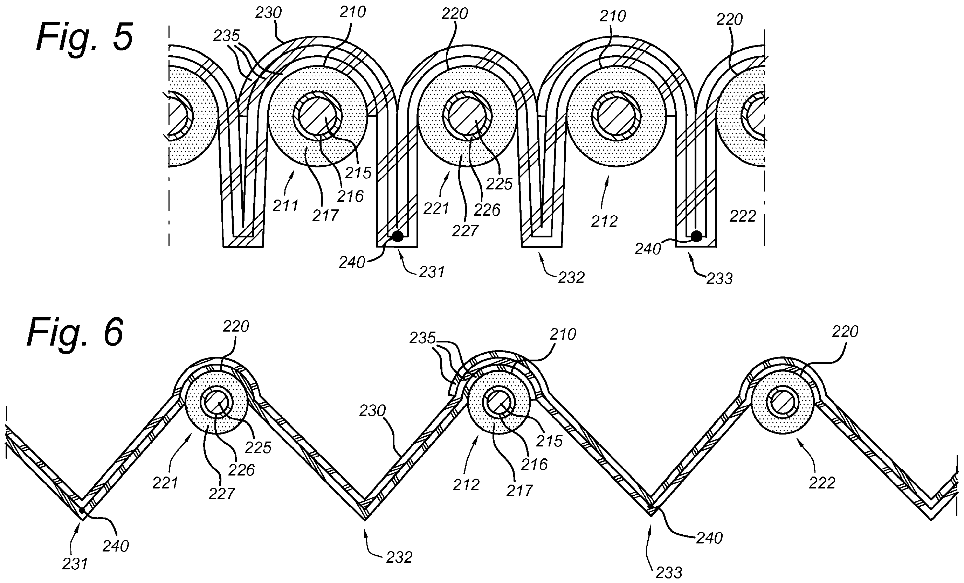

Fig. 4 shows a side view of a second embodiment of an electrical stretch hose 200 according to the invention, in retracted state, with part of the wall 201 of the hose broken away to expose the cross-section of the hose wall. Fig. 5 shows a detail of the cross-section of the wall of this hose 200. Fig. 6 shows the cross-section of Fig. 5 in axially-extended state.

The electrical stretch hose 200 comprises two alternating helical support wires 210, 220 and a cover 230 of flexible material provided on the outside of the helical support wires and attached thereto. The helical support wires have a natural axially-retracted state (Fig. 5) and an axially-extended state (Fig. 6) when the hose is pulled. In retracted state, the cover 230 is folded between adjacent windings 211, 221, 212, 222 of the helical support wires 210, 220, i.e. the support wires 210, 220 retract the cover and thereby folded portions 231, 232, 233 are formed between the adjacent windings. When the hose is pulled to the extended state, the windings 211, 221, 212, 222 are spaced apart and the cover portions 231, 232, 233 are unfolded.

The two helical support wires 210, 220 may have the same construction and the same dimensions. Each comprises a core wire 215, 225 made of steel, a conductive coating 216, 226 provided on the steel core wire and an insulation layer 217, 227 surrounding the conductive layer. As a result of this construction with two helical support wires 210, 220 which are wound in parallel, the overall weight of the hose 200 can be reduced compared to prior art. This is because the strength or crush resistance needed to avoid collapse during use, e.g. vacuuming, is provided by two helical support wires instead of only one and the two helical support wires can consequently each have a reduced strength compared to the single helical support wire. Furthermore, the two helical support wires have a larger pitch (at least twice) than the single helical support wire, so that their length is at most half of that of the single helical support wire, which can also contribute to the reduced weight. Still further, by providing the electrical conductors in the form of conductive coatings on the steel wires, the added weight to provide the conductors on the hose can also be reduced.

The properties of the components of the hose 200 may vary according to the intended application. In the following, the application in cleaners, such as for example central vacuum cleaner systems, is discussed. For such applications, the internal diameter of the hose 200 in retracted condition is preferably in the range of 25 to 40 mm.

In order to achieve sufficient stretchability (preferably at least twice the retracted length), memory (capacity to retract to the naturally-retracted state) and sufficient crush resistance, the steel wires 215, 225 preferably have the following properties: core diameter (diameter of cross-section of the steel wire) in the range of 0.7 mm to 1.4 mm and made of steel with an ultimate tensile strength in the range of 600 to 2500 MPa, preferably 600 to 1200 MPa.

In case the electrical stretch hose 200 is intended to carry a high voltage (e.g. 110 V), the conductive coating may be a relatively thin aluminium coating or a copper coating (e.g. copper wash) with a thickness in the range of 0.1 to 0.4 mm.

In case the electrical stretch hose 200 is intended to carry a low voltage (e.g. 24 V), which implies higher currents for the same power, the conductive coating may be a copper cladding with a thickness in the range of 0.1 to 0.6 mm. It has been found that with such a copper cladding, the voltage drop and the power loss over the entire length of the hose (1.4 m extended) can be kept below 10%. Such a coating is also suitable for higher voltages.

In general, it is preferred that the conductive coating 217, 227 is made of a material with an electrical resistivity p below 3.0 x 10⁻⁸ Ωm.

The hose 200 further comprises a conductive signal wire 240, which is embedded in alternating folded portions of cover 230, more particularly sandwiched between two overlapping convolutes of the convoluted web 235 which forms the cover 230. The signal wire 240 may be a copper or aluminium wire with a diameter of 0.1 to 0.6 mm.

In the embodiment shown, the signal wire 240 is located right at the fold of the convoluted web 235. In alternative embodiments, the signal wire 240 may also be located in any other location between the helical support wires 210, 220, preferably sandwiched between two overlapping convolutes of the convoluted web 235. In one embodiment, the signal wire 240 may be located in a position adjacent to one of the helical support wires 210,220.

The insulation layers 217, 227 may be made of any electrical insulation material and with any thickness deemed suitable by the person skilled in the art. Preferably the layers 217, 227 are made of a thermoplastic material which bonds well with the material of the cover 230, which is preferably also a thermoplastic material.

The cover 230 may be a convoluted web 235 with a thickness in the range of 0.3 to 0.6mm. As shown, the convoluted web has a span of five consecutive windings of the helical support members and the convolutes have an overlap over three consecutive windings of the helical support members.

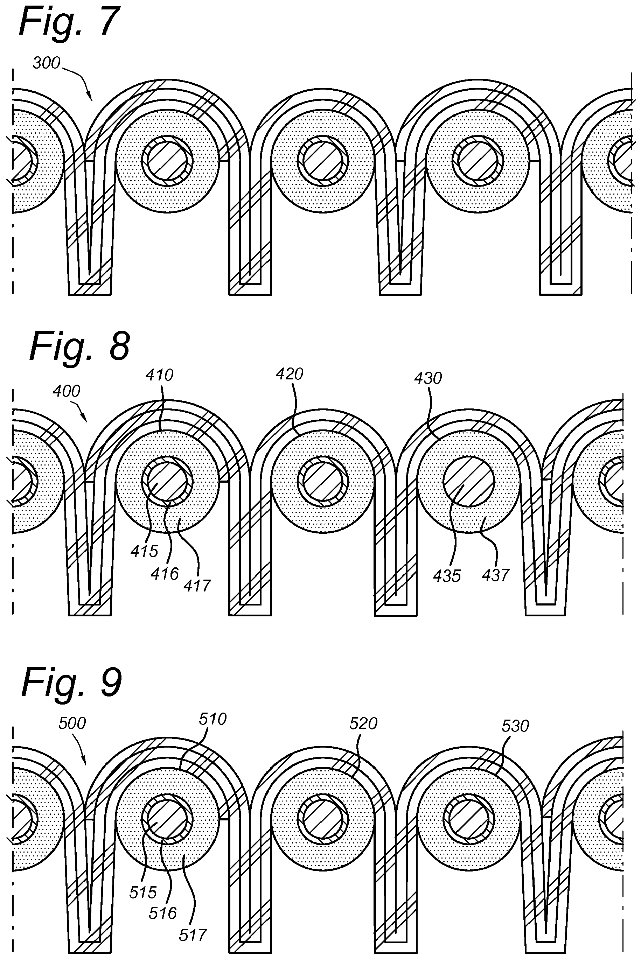

Fig. 7 shows a detail of a cross-section of the hose wall of a third embodiment. This hose 300 has the same construction as the hose 200 of Figs. 4-6 except for the omission of the signal wire.

Fig. 8 shows a detail of a cross-section of the hose wall of a fourth embodiment. This hose 400 has three alternating helical support wires 410, 420, 430. Two of the wires 410, 420 have a similar construction as discussed above, with a steel core wire 415, a conductive coating 416 and an outer insulation 417, and are thus configured for conducting electric power. The third wire 430 is a steel wire 435 surrounded by a plastic sleeve 437 and is provided for additional support. The sleeve 437 may be the same as the outer insulation 417 of the other wires 410, 420, however does not function as electrical insulation. This hose construction with three helical support wires 410, 420, 430 makes it possible to use thinner support wires compared to the constructions of Figs. 1 to 6 with two support wires. The properties of the wires 410 and 420 may further be the same as have been discussed with reference to Figs. 1 to 6. The steel wire 435 of the third support wire 430 preferably has the same outer diameter as the coated steel wire (the steel core 415 + coating 416) of the other two support wires 410, 420.

Fig. 9 shows a detail of a cross-section of the hose wall of a fifth embodiment. This hose 500 has three alternating helical support wires 510, 520, 530 of the same dimensions and construction, i.e. each having a steel core 515, conductive coating 516 and insulation 517. Two of the wires may be chosen for conducting electric power, leaving a third one for conducting signals. This hose construction has the further advantage that all the support wires 510, 520, 530 may have substantially the same properties (tensile strength and others). The properties of the wires 510, 520 and 530 may further be the same as have been discussed with reference to Figs. 1 to 6.

In the embodiments of Figs. 8 and 9, the cover may likewise be a convoluted web. The convoluted web preferably spans at least seven consecutive windings with an overlap over at least four consecutive windings.

The hoses of Figs. 1-9 may be further provided with connectors at both ends of the hose for connecting the hose to further equipment, such as for example one connector for connection to a suction pipe and the other connector for connection to a wall socket of a central vacuum cleaning system or a canister of a vacuum cleaner. The power conducting and signal wires may be connected to contacts provided in the connectors for electric connection to further electric components.

## Claims

1. An electrical stretch hose comprising at least two alternating helical support wires and a cover of flexible plastic material provided on the outside of the helical support wires, wherein said helical support wires have a natural axially-retracted state wherein the cover of flexible plastic material is folded between adjacent windings of said helical support wires and an axially-extended state when the hose is pulled wherein the adjacent windings of said helical support wires are spaced apart and said flexible material is unfolded, wherein at least two of said helical support wires each comprise a steel wire, a conductive coating provided on said steel wire and provided to improve conductivity of said steel wire, and an insulation layer surrounding said conductive layer.

2. The electrical stretch hose of claim 1, wherein said steel wires have a cross-section with a diameter in the range of 0.7 mm to 1.4 mm, preferably 0.9 mm to 1.1 mm.

3. The electrical stretch hose of claim 1 or 2, wherein said steel wires are made of steel with an ultimate tensile strength in the range of 600 to 2500 MPa.

4. The electrical stretch hose of any one of the preceding claims, wherein said conductive coating is made of a material with an electrical resistivity p below 3.0 x 10⁻⁸ Ωm.

5. The electrical stretch hose of claim 4, wherein said conductive coating is made of aluminium or copper.

6. The electrical stretch hose of claim 4, wherein said conductive coating is a copper cladding with a thickness in the range of 0.1 to 0.6 mm.

7. The electrical stretch hose of claim 6, wherein said copper clad steel wire has a copper content of at least 10%, preferably at least 35% by volume.

8. The electrical stretch hose of any one of the preceding claims, wherein the hose further comprises at least one conductive signal wire.

9. The electrical stretch hose of claim 8, wherein the conductive signal wire is embedded in the insulation layer of one of the helical support members.

10. The electrical stretch hose of claim 8, wherein the conductive signal wire is embedded in portions of the cover in between the adjacent windings.

11. The electrical stretch hose of any one of claims 8-10, wherein said conductive signal wire has a cross-section with a diameter in the range of 0.1 to 0.6 mm.

12. The electrical stretch hose of any one of the preceding claims, wherein the cover is a convoluted web.

13. The electrical stretch hose of any one of the preceding claims, wherein the hose is stretchable up to at least twice its length in retracted state.

14. The electrical stretch hose of any one of the preceding claims, wherein said helical support wires have the same dimensions.

15. The electrical stretch hose of any one of the preceding claims, wherein the hose in retracted state has an interior diameter in the range of 25 to 40 mm.
